**Europäisches Patentamt**

**European Patent Office**

**Office européen des brevets**

(19)

(11) **EP 1 398 596 A2**

(12) **EUROPÄISCHE PATENTANMELDUNG**

(43) Veröffentlichungstag:
**17.03.2004 Patentblatt 2004/12**

(51) Int Cl.⁷: **G01B 11/02**

(21) Anmeldenummer: **03102603.2**

(22) Anmeldetag: **20.08.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **12.09.2002 DE 10242373**

(71) Anmelder: **SIEMENS AKTIENGESELLSCHAFT**
**80333 München (DE)**

(72) Erfinder: **Schick, Anton**
**84149, Velden (DE)**

(54) **Konfokaler Abstandssensor**

(57) Die Erfindung schafft einen konfokalen Abstandssensor 100, bei dem durch eine gestaffelte Anordnung von optischen Ausgängen relativ zu einer Abbildungsoptik 140 in dem Objektbereich des Abstandssensor 100 in unterschiedlicher Höhe reelle Bilder 160a, 160b der optischen Ausgänge erzeugt werden. Eine zu vermessende Oberfläche 150, welche sich in dem Bereich zwischen den reellen Bildern 160a und 160b befindet, streut die von den optischen Ausgängen emittierten Beleuchtungsstrahlen 111a und 111b zumindest teilweise zurück, so dass zwei Messstrahlen 161a und 161b erzeugt werden, deren Intensitäten jeweils von einem Lichtdetektor 170a, 170b erfasst werden. Durch eine Interpolation zwischen den gemessenen Lichtintensitäten kann die Höhenlage der abgetasteten Punkte der Oberfläche 150 berechnet werden. Gemäß einem Ausführungsbeispiel der Erfindung kann die zu vermessende Oberfläche 150 gleichzeitig an mehreren Tastpunkten vermessen werden. Bevorzugt werden zur Lichterzeugung zwei flächige Lichtquellen 110a und 110b und zur Lichtdetektion zwei flächige ortsauflösende Kameras verwendet.

FIG 1

EP 1 398 596 A2

**Beschreibung**

Die Erfindung betrifft einen Sensor zur schnellen optischen Abstandsmessung nach dem konfokalen Abbildungsprinzip.

Durch die immer weiter steigende Integrationsdichte auf elektronischen Baugruppen nimmt die Zahl der Anschlüsse von elektronischen Bauelementen stetig zu. Um diesem Trend zu entsprechen, wurden Montage- und Kontaktierungsverfahren entwickelt, bei denen die Bauelemente mittels Lotkugeln auf der Unterseite der Bauelemente mit Anschlussflächen auf einem zu bestückenden Substrat kontaktiert werden. Derartige Bauelemente sind beispielsweise sog. Ball-Grid-Arrays (BGA) oder Flip-Chips. Um eine zuverlässige Kontaktierung zu gewährleisten, müssen die Anschlüsse vor dem Bestücken genau inspiziert werden, da nach dem Bestücken fehlerhafte Anschlüsse, die zu einem schlechten elektrischen Kontakt zwischen Bauelement und den Anschlussflächen führen, nicht mehr detektiert werden können.

Um elektronische Baugruppen kostengünstig und mit hoher Qualität herstellen zu können, werden an moderne Inspektionssysteme für elektrische Bauelemente eine Vielzahl von Anforderungen gestellt. So muss das Inspektionssystem in der Lage sein, die Parameter des Inspektionsgegenstandes, wie beispielsweise dessen Abmessungen, die Koplanarität der elektrischen Anschlüsse oder die Teilung der Anschlüsse zu bestimmen. Ferner soll die Inspektion innerhalb einer möglichst kurzen Prüfzeit durchführbar sein, niedrige Kosten verursachen und berührungslos arbeiten. Diese hohen Anforderungen für die Vermessung von dreidimensionalen Oberflächen können in der Regel nur von optischen Verfahren zur Vermessung von Oberflächenprofilen erfüllt werden. Als optische Inspektionsverfahren sind in diesem Zusammenhang sog. Laufzeitverfahren, Triangulationsverfahren und konfokale Verfahren bekannt.

Zu den Laufzeitverfahren, bei denen der Abstand zwischen Sensor und der zu vermessenden Oberfläche aus der Laufzeit eines von der Oberfläche zurückreflektierten Lichtpulses bestimmt wird, zählen im weiteren Zusammenhang auch die sog. interferometrischen Verfahren, welche durch Überlagerung von kohärenten Lichtstrahlen sehr hohe räumliche Auflösungen erzielen können. Das Interferenzsignal wird durch eine mechanische Bewegung eines optischen Elements eines Interferometers bzw. einer Veränderung der optischen Weglänge innerhalb eines Interferometers erzeugt. Dabei sind insbesondere für eine flächenhafte Bildaufnahme einer zu vermessenden Oberfläche relativ lange Messzeiten erforderlich.

Zu den Triangulationsverfahren zählen alle Verfahren, bei denen die Beleuchtung- oder Projektionsrichtung von der Beobachtungsrichtung abweicht. Auch Verfahren, die mittels strukturierter Beleuchtung arbeiten (z.B. Moire-Verfahren), werden hierzu gerechnet, da die Deformation der auf die zu erfassende Oberfläche projizierten Muster, aus welcher Deformation die Höhenlage einzelner Oberflächenpunkte berechnet wird, nur unter einem bestimmten Triangulationswinkel beobachtet werden kann. Die Vermessung von dreidimensionalen Oberflächenprofilen mittels einer strukturierten Beleuchtung setzt idealerweise isotrop streuende Objektoberflächen voraus, da anisotrop streuende Oberflächen, d.h. zumindest leicht spiegelnde Oberflächen aufgrund einer Spiegellinsenwirkung nicht die Deformation der strukturierten Beleuchtung durch die dreidimensionale Oberfläche wiedergeben können. Da die Zuverlässigkeit der Messergebnisse sehr stark von dem Reflexionsverhalten der zu vermessenden Oberfläche abhängig ist, ist eine Lotkugelinspektion mittels einer strukturierten Beleuchtung in der Regel unmöglich bzw. äußerst schwer zu realisieren.

Zu den Triangulationsverfahren zählen außerdem sog. Laser-Triangulationsverfahren, bei denen die zu vermessende Ober fläche mit einem Laserstrahl abgetastet und der Auftreffpunkt des Laserstrahls von einer Kamera erfasst wird. Schnelle Ablenkeinheiten, wie beispielsweise rotierende Polygonspiegel oder Galvanometerscanner dienen hierbei zur definierten Ablenkung des Laserstrahls. Alternativ kann durch eine Bewegung des zu vermessenden Objekts eine Relativbewegung zwischen dem Objekt und dem Laserstrahl erzeugt werden. Messungen mittels Laser-Triangulation haben den Nachteil, dass mehrere Oberflächenpunkte nicht simultan, sondern nur zeitlich nacheinander abgetastet werden können, so dass die resultierenden Prüfzeiten entsprechend lang sind.

Konfokale optische Verfahren zur Vermessung von dreidimensionalen Oberflächen zeichnen sich durch eine hohe Auflösung und durch eine hohe Robustheit gegenüber von Sekundärreflexen erzeugtem Streulicht aus. Ferner haben konfokale optische Verfahren den Vorteil, dass die Oberflächenvermessung koaxial erfolgen kann, so dass Abschattungsprobleme durch schräg auf die Oberfläche treffendes Beleuchtungslicht bzw. durch einen zu der Oberfläche schrägen Beobachtungswinkel nicht auftreten. Die konfokale Mikroskopie, welche bereits seit langem bekannt ist, stellt demzufolge ein sehr präzises, jedoch langsames Verfahren zur dreidimensionalen Oberflächenvermessung dar. Herkömmlichen konfokale Abstandsensoren haben zudem den Nachteil, dass zur Abstandmessung eine periodische Relativbewegung zwischen dem Sensor und der zu vermessenden Oberfläche erforderlich ist, so dass aufgrund der Massenträgheit der zu bewegenden Massen die Abtastrate zusätzlich begrenzt ist.

Aus der EP 835423 B1 ist ein modifizierter konfokaler Sensor zur dreidimensionalen Oberflächenvermessung bekannt, bei dem durch eine schnelle Fokusverschiebung, welche durch einen mechanisch bewegten Retroreflektor bewirkt wird, unter Verwendung einer zeilenförmigen Anordnung von einer Vielzahl von Laserstrahlen eine zügige Oberflächenvermessung ermöglicht wird. Die Bildaufnahme ist dabei vergleichbar mit einer Zei lenkamera, mittels welcher durch eine Bewegung des zu vermessenden Objekts und/oder der Kamera in einer Richtung senkrecht zu der Kamerazeile im Prinzip Endlosbilder aufgenommen werden können. Aus diesem Grund eignet sich der modifizierte konfokale Sensor auch zum Vermessen von größeren Objekten wie Wafer oder Substrate. Da die Bildbreite durch die Länge der abgetasteten Zeile bestimmt wird, müssen größere Bildbereiche durch ein mäanderförmiges Abtasten der Oberfläche vermessen werden. Der modifizierte konfokale Sensor hat den Nachteil, dass die erforderliche Fokusverschiebung durch eine Bewegung des Retroreflektors erzeugt wird, so dass zwar eine gegenüber herkömmlichen konfokalen Abstandsensoren geringere Masse bewegt werden muss, die Massenträgheit des bewegten Retroreflektor aber trotzdem die Abtastrate begrenzt.

Der Erfindung liegt somit die Aufgabe zugrunde, einen Sensor zur schnellen optischen Abstandsmessung nach dem konfokalen Abbildungsprinzip zu schaffen, welcher zur Abstandsbestimmung zwischen dem Sensor und einem Oberflächenpunkt weder eine Relativbewegung zwischen Sensor und zu vermessender Oberfläche noch eine mechanische Bewegung einer optischen Komponente des Sensors erfordert.

Diese Aufgabe wird gelöst durch einen Sensor zur schnellen optischen Abstandsmessung nach dem konfokalen Abbildungsprinzip mit den Merkmalen des unabhängigen Anspruchs 1. Der Erfindung liegt die Erkenntnis zugrunde, dass durch eine entlang der Höhenkoordinate gestaffelte Anordnung von reellen Bildern von zwei verschiedenen optischen Ausgängen, die unterschiedlich beabstandet von der Abbildungsoptik angeordnet sind, der Abstand einer zu vermessenden Oberfläche von dem Sensor durch eine Interpolation zwischen den Rückstreuintensitäten von zwei Messstrahlen bestimmt werden kann. Gemäß der Erfindung trifft jeweils ein Messstrahl in einen optischen Eingang und die entsprechende Intensität wird von einem dem jeweiligen optischen Eingang zugeordneten Lichtdetektor erfasst. Da sich jeder der beiden optischen Eingänge jeweils an derselben Stelle wie ein dem optischen Eingang zugeordneter optischer Ausgang befindet, sind die optischen Ausgänge und die optischen Eingänge automatisch jeweils paarweise konfokal zueinander angeordnet. Aus diesem Grund erfasst der erste Lichtdetektor bevorzugt das von dem ersten Beleuchtungsstrahl von der Oberfläche zurückreflektierte Messlicht. Ebenso erfasst der zweite Lichtdetektor bevorzugt das von dem zweiten Beleuchtungsstrahl von der Oberfläche zurückreflektierte zweite Messlicht. Die Abstandsmessung liefert besonders dann einen zuverlässigen Wert, wenn sich die zu erfassende Oberfläche zwischen den beiden reellen Bildern der beiden optischen Ausgänge befindet. In diesem Fall werden die beiden Intensitäten dahingehend miteinander verglichen, dass eine Interpolation zwischen den beiden Intensitäten durchgeführt wird. Der erfindungsgemäße Abstandssensor hat gegenüber herkömmlichen Abstandssensoren den Vorteil, dass die Abstandsbestimmung sowohl ohne eine Relativbewegung zwischen dem Sensor und der zu vermessenden Oberfläche als auch ohne eine Bewegung einer optischen Komponente des Sensors erfolgen kann.

Es wird darauf hingewiesen, dass eine Abstandsmessung auch dann möglich ist, wenn sich die zu vermessende Oberfläche nicht zwischen den beiden reellen Bildern der optischen Ausgänge befindet. In diesem Fall wird die Höhenlage der zu vermessenden Oberfläche nicht durch eine Interpolation, sondern durch eine Extrapolation bestimmt. Es wird ferner darauf hingewiesen, dass die Genauigkeit und/oder der Messbereich des Abstandssensors dadurch vergrößert werden kann, dass ein oder mehrere weitere gestaffelt angeordnete Paare von optischen Ein- und Ausgängen verwendet werden, welche durch die Abbildungsoptik auf eine Mehrzahl von reellen Bildern abgebildet werden, die in ihrer Höhenlage in Bezug auf die zu vermessende Oberfläche ebenfalls entsprechend gestaffelt angeordnet sind.

Bei der vorteilhaften Weiterbildung nach Anspruch 2 bestimmt die relative Anordnung der optischen Ein- bzw. Ausgänge zu einander die Lage der Abtastpunkte auf der zu vermessenden Oberfläche. Das gleichzeitige Abtasten der zu vermessenden Oberfläche an verschiedenen Abtastpunkten ermöglicht eine größere Abtastleistung, so dass das Oberflächenprofil von zu vermessenden Messobjekten wesentlich schneller erfasst werden kann.

Die Weiterbildung nach Anspruch 3 ermöglicht das Abtasten einer Oberfläche an verschiedenen Abtastpunkten, die entlang einer eindimensionalen Abtastzeile angeordnet sind. Durch ein transversales Verschieben des zu vermessenden Objekts kann somit eine größere Oberfläche zügig vermessen werden. Falls die Breite der zu vermessenden Oberfläche größer ist als die Länge der Abtastzeile, kann das Messobjekt und/oder der Abstandssensor transversal zu dem auf die Objektoberfläche treffenden Beleuchtungsstrahlen mäanderförmig bewegt werden, so dass mit dem Sensor im Prinzip beliebig große Oberflächen vermessen werden können.

Die Weiterbildung nach Anspruch 4 hat den Vorteil, dass die zu vermessende Oberfläche gleichzeitig an einer Mehrzahl von Abtastpunkten vermessen werden kann, welche auf einer zweidimensionalen Abtastfläche angeordnet sind. Damit wird die Abtastleistung weiter erhöht und für den Fall, dass die zu vermessende Fläche nicht größer als die zweidimensionale Abtastfläche ist, wird ein transversales Verschieben des Messobjekts und/oder des Sensors nicht mehr erforderlich, da mit einer einzigen Aufnahme die gesamte relevante Oberfläche vermessen werden kann.

Da die Höhenauflösung des Abstandssensors von der Querschnittsfläche der optischen Ausgänge bzw. der optischen Eingänge abhängt, führen gemäß Anspruch 5 annähernd punktförmige optische Ausgänge bzw. optische Eingänge mit einer an die Wellenlänge angepassten Querschnittsfläche zu einem großen Auflösungsvermögen.

Die Verwendung von Lichtwellenleiter-Endflächen für die optischen Ausgänge und die optischen Eingänge gemäß Anspruch 6 hat den Vorteil, dass die optischen Ausgänge und die optischen Eingänge relativ zu dem Strahlteiler und zu der Abbildungsoptik einfach justiert werden können. Die Endfläche eines einzelnen Lichtwellenleiters wirkt dann sowohl als ein optischer Ausgang als auch als ein optischer Eingang, wenn das andere Ende des Lichtwellenleiters sowohl mit einer Lichtquelle als auch mit einem Lichtdetektor optisch gekoppelt ist. Dies kann beispielsweise dadurch realisiert werden, dass das andere Ende des Lichtwellenleiters in zwei Teilenden aufgespalten ist, wobei ein Teilende mit der Lichtquelle und das andere Teilende mit dem Lichtdetektor gekoppelt ist. Ebenso kann das andere Ende des Lichtwellenleiters auch über einen halbdurchlässigen Spiegel sowohl mit dem Lichtdetektor als auch mit der Lichtquelle optisch gekoppelt sein.

Gemäß Anspruch 7 werden die optischen Ausgänge und die optischen Eingänge jeweils mittels einer Lochblende realisiert. Dabei ist die Blendenöffnung einer jeden Lochblende über einen Strahlteiler sowohl mit einem Lichtdetektor als auch mit einer Lichtquelle optisch gekoppelt. Je nach Anzahl und relativer Anordnung der zu realisierenden optischen Ausgänge kann eine einzelne Lochblende, eine Lochblendenzeile oder eine Lochblendenmatrix verwendet werden. Dies hat den Vorteil, dass der konfokale Abstandssensor in einer kompakten Bauweise realisiert werden kann.

Gemäß Anspruch 8 werden Schwarz-Weiß-Lichtdetektoren verwendet, welche gegenüber spektral auflösenden Lichtdetektoren, die gemäß der vorliegenden Erfindung nicht erforderlich sind, erheblich billiger sind.

Gemäß Anspruch 9 werden als Lichtdetektoren Kameras, bevorzugt CCD-Kameras oder CMOS-Kameras verwendet, deren Verwendung insbesondere dann vorteilhaft ist, wenn eine Mehrzahl von ersten Lichtdetektoren und eine Mehrzahl von zweiten Lichtdetektoren mittels jeweils einer einzigen ortsauflösenden Kamera realisiert werden. In diesem Fall ist jeder erste optische Eingang zumindest einem oder einer Mehrzahl von Pixeln der ersten Kamera zugeordnet und jeder zweite optische Eingang ist zumindest einem oder einer Mehrzahl von Pixeln der zweiten Kamera zugeordnet. Auf diese Weise kann eine Mehrzahl von Lichtdetektoren kostengünstig realisiert werden. Es wird darauf hingewiesen, dass im Prinzip auch sämtliche optischen Eingänge mittels einer einzigen Kamera realisiert werden können, was insbesondere dann vorteilhaft ist, wenn aufgrund einer günstigen Strahlführung der Messstrahlen sich die ersten optischen Eingänge in der Nähe der zweiten optischen Eingänge befinden.

Gemäß Anspruch 10 wird eine Mehrzahl von ersten optischen Ausgängen mit einer ersten Lichtquelle und eine Mehrzahl von zweiten optischen Ausgängen mit einer zweiten Lichtquelle realisiert. Dabei sind insbesondere flächige Lichtquellen geeignet, bei denen jeweils ein Oberflächenelement der Lichtquelle mittels einer optischen Abbildung über eine weitere Abbildungsoptik und einen weiteren Strahlteiler mit einem optischen Ausgang gekoppelt ist. Es wird darauf hingewiesen, dass sämtliche optischen Ausgänge auch mittels einer einzigen Lichtquelle realisiert werden können, was insbesondere dann vorteilhaft ist, wenn durch eine geschickte Strahlführung die Mehrzahl von ersten optischen Ausgängen in der Nähe der Mehrzahl von zweiten optischen Ausgängen angeordnet ist.

Weitere Vorteile und Merkmale der vorliegenden Erfindung ergeben sich aus der folgenden beispielhaften Beschreibung derzeit bevorzugter Ausführungsformen.

Figur 1     zeigt eine schematische Darstellung eines konfokalen Abstandssensors mit einer gestaffelten Anordnung von Lochblenden,

Figur 2     illustriert die Bestimmung der Höhenlage eines Abtastpunkts und

Figur 3     zeigt eine schematische Darstellung eines konfokalen Abstandssensors mit einer gestaffelten Anordnung von Lichtwellenleiter-Enden.

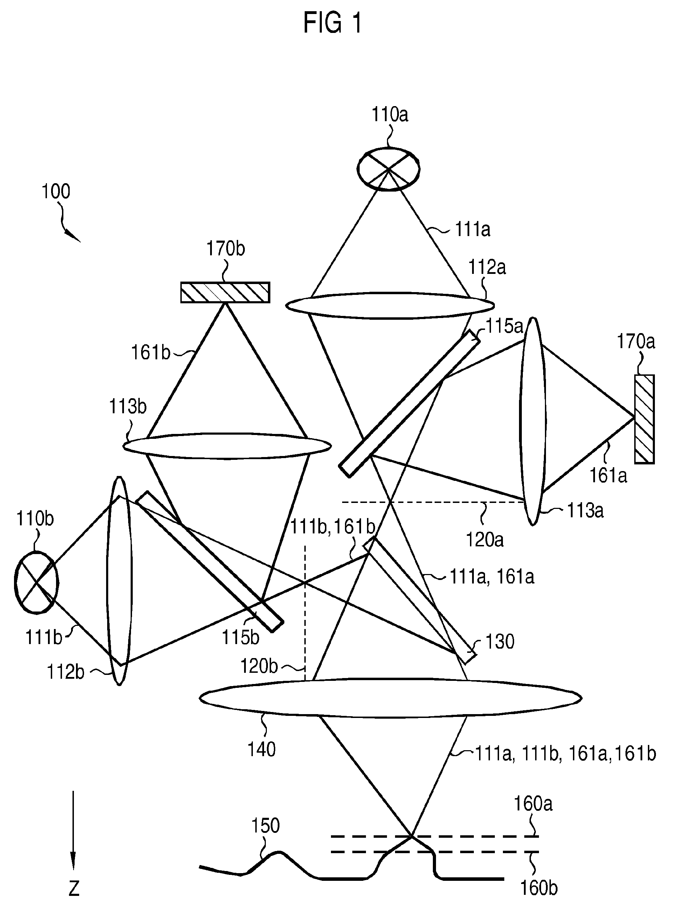

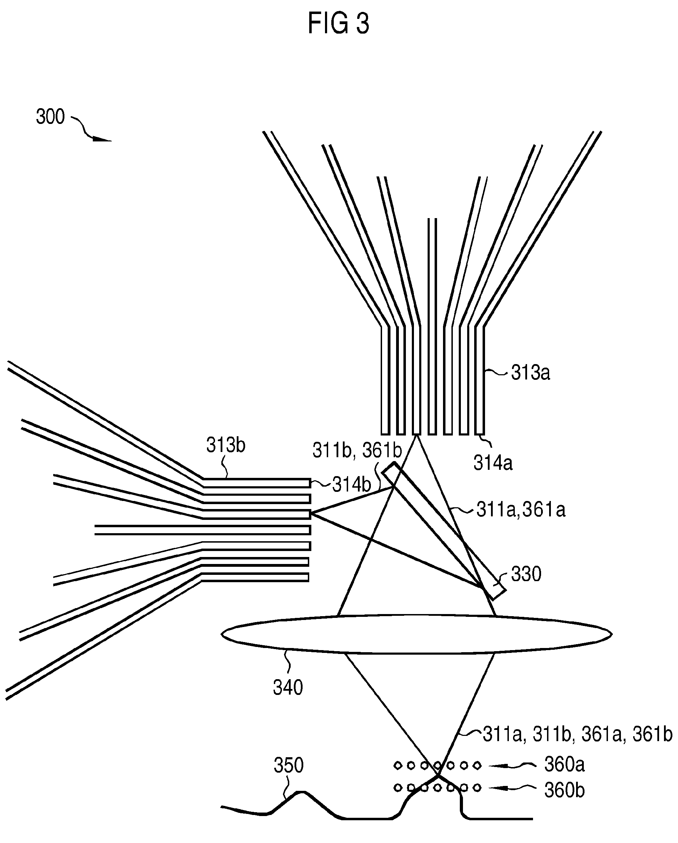

An dieser Stelle bleibt anzumerken, dass sich in den Figuren 1 und 3 einander entsprechende Komponenten lediglich in ihrer ersten Ziffer unterscheiden.

Der in Figur 1 dargestellte Abstandssensor 100 weist zwei gestaffelt angeordnete Lochblendenmatrizen, eine erste Lochblendenmatrix 120a und eine zweite Lochblendenmatrix 120b auf. Jede Öffnung der beiden Lochblendenmatrizen dient zugleich als ein optischer Ausgang, welcher einen ersten Beleuchtungsstrahl 111a bzw. einen zweiten Beleuchtungsstrahl 111b emittiert, als auch als ein optischer Eingang, in welchen ein erster Messstrahl 161a bzw. ein zweiter Messstrahl 161b trifft. Die Öffnungen der beiden Lochblendenmatrizen 120a bzw. 120b können deshalb gleichzeitig sowohl als optische Ausgänge als auch als optische Eingänge dienen, weil jede Öffnung sowohl mit einer Lichtquelle 110a bzw. 110b als auch mit einer Kamera 170a bzw. 170b optisch gekoppelt ist.

Gemäß dem hier beschriebenen Ausführungsbeispiel der Erfindung sind die optischen Ausgänge der ersten Lochblendenmatrix 120a mit einer ersten Lichtquelle 110a derart gekoppelt, dass ein erster Beleuchtungsstrahl 111a, welcher von der ersten Lichtquelle 110a emittiert wird, mittels einer Optik 112a auf eine entsprechende Öffnung der ersten Lochblendenmatrix 120a abgebildet wird. Wie aus Figur 1 ersichtlich, befindet sich zwischen der ersten Lochblendenmatrix 120a und der Optik 112a ein Strahlteiler 115a, durch welchen der erste Beleuchtungsstrahl 111a transmittiert wird. Die optischen Eingänge der ersten Lochblendenmatrix 120a sind auf ähnliche Weise mit einer ersten Kamera 170a optisch gekoppelt, wobei der erste Messstrahl 161a, welcher in den optischen Eingang trifft, über eine Reflexion an dem Strahlteiler 115a und eine Abbildung durch die Optik 113a auf die erste Kamera 170 gelenkt wird. Die erste Lichtquelle 110a weist dabei eine derart große Leuchtfläche auf, dass sämtliche Blendenöffnungen der ersten Lochblendenmatrix 120a beleuchtet werden. Die erste Kamera 170a, welche eine ortsauflösende Kamera ist, ist derart angeordnet, dass jede Blendenöffnung der ersten Lochblendenmatrix 120a einem oder einer Mehrzahl von Pixeln der ersten Kamera 170a zugeordnet ist, so dass die in die optischen Eingänge der ersten Lochblendenmatrix 120a tretenden Lichtintensitäten unabhängig voneinander gemessen werden können.

Die optische Kopplung der optischen Ausgänge der zweiten Lochblendenmatrix 120b mit einer zweiten Lichtquelle 110b sowie die optischen Kopplungen der optischen Eingänge der zweiten Lochblendenmatrix 120b mit einer zweiten Kamera 170b erfolgt analog zu der zuvor beschriebenen Kopplung zwischen der ersten Lichtquelle 110a mit den optischen Ausgängen der ersten Lichtblendenmatrix 120a bzw. der optischen Eingänge der ersten Lochblendenmatrix 120a mit der ersten Kamera 170a. Dabei werden, wie aus Figur 1 ersichtlich, zwei Optiken 112b und 113b sowie ein Strahlteiler 115b verwendet, durch welchen ein zweiter Beleuchtungsstrahl 111b transmittiert wird und an welchem ein zweiter Messstrahl 161b reflektiert wird.

Es wird darauf hingewiesen, dass die in Figur 1 dargestellte Anordnung des Abstandssensors 100 dahingehend modifiziert werden kann, dass die Position der ersten Lichtquelle 110a bzw. der zweiten Lichtquelle 110b mit der Position der ersten Kamera 170a bzw. der zweiten Kamera 170b vertauscht werden kann. In diesem Fall erfolgt die Kopplung zwischen der jeweiligen Lichtquelle und den optischen Ausgängen über eine Reflexion der Beleuchtungsstrahlen 111a bzw. 111b an den Strahlteilern 115a bzw. 115b und die Kopplung der optischen Eingänge mit den beiden Kameras erfolgt über eine Transmission der Messstrahlen 161a bzw. 161b durch die Strahlteiler 115a bzw. 115b.

Die optischen Ausgänge der ersten Lochblendenmatrix 120a werden nach einer Transmission durch einen Strahlteiler 130 mittels einer Abbildungsoptik 140 in den Objektbereich des Abstandssensors 100 abgebildet, wobei in einem bestimmten Abstand von der Abbildungsoptik 140 ein reelles Bild 160a der ersten Lochblendenmatrix 120a erzeugt wird. Entsprechend wird die zweite Lochblendenmatrix 120b nach einer Reflexion an dem Strahlteiler 130 mittels der Abbildungsoptik 140 auf ein reelles Bild 160b der zweiten Lochblendenmatrix 120b abgebildet. Aufgrund der gestaffelten Anordnung der beiden Lochblendenmatrizen 120a und 120b entstehen die beiden reellen Bilder 160a und 160b in einem unterschiedlichen Abstand von der Abbildungsoptik 140.

Befindet sich nun eine zu vermessende Oberfläche 150 in dem Bereich zwischen den reellen Bildern 160a und 160b, so wird die Oberfläche abhängig von ihrer Höhenlage von dem ersten Beleuchtungsstrahl 110a und dem zweiten Beleuchtungsstrahl 110b mit unterschiedlichen Beleuchtungsintensitäten beleuchtet, weil die durch die beiden Beleuchtungsstrahlen jeweils beleuchteten Flächen unterschiedlich groß sind.

Aufgrund der konfokalen Anordnung der optischen Eingänge zu den optischen Ausgängen, welche durch die gleichzeitige Kopplung der Lochblendenöffnungen mit einer Lichtquelle und einer Kamera automatisch erfüllt ist, bestimmt die Höhenlage der von der den Beleuchtungsstrahlen 111a und 111b abgetasteten Oberflächenpunkte die Lichtintensitäten, die von den beiden Kameras 170a und 170b erfasst werden. Durch eine Interpolation der mit beiden Kameras 170a und 170b gemessenen Lichtintensitäten läßt sich die genaue Höhe der Oberfläche 150 in dem Bereich zwischen dem reellen Bild 160a und dem reellen Bild 160b berechnen.

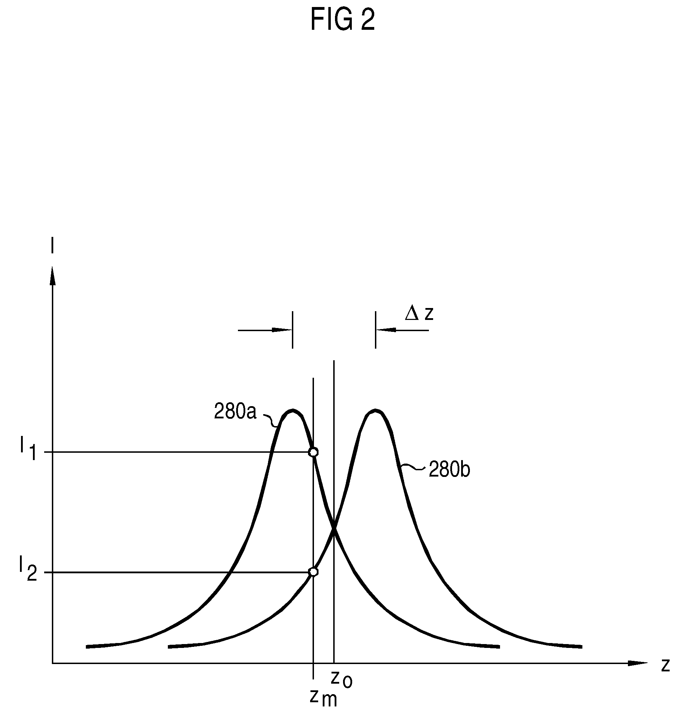

Die Berechnung der Höhenlage eines Abtastpunktes wird im folgenden anhand von Figur 2 erläutert. In dem dargestellten Koordinatensystem ist die von einem Abtastpunkt zurückgestreute Lichtintensität in Abhängigkeit von der Höhenkoordinate z dargestellt. Ein erster Intensitätsverlauf 280a illustriert die Intensität des von einem Oberflächenpunkt zurückgestreuten Messstrahls 161a, wenn der entsprechende Oberflächenpunkt entlang der Höhenkoordinate z verschoben wird. Entsprechendes gilt für den zweiten Intensitätsverlauf 280b. Wie aus Figur 2 ersichtlich, können die beiden Intensitätsverläufe 280a und 280b in guter Näherung durch jeweils eine Gauß-Kurve beschrieben werden. Der relative Abstand der beiden Gauß-Kurven 280a und 280b entlang der Höhenkoordinate z entspricht dem Abstand zwischen den beiden reellen Bildern 160a und 160b. Dieser Abstand bestimmt gleichzeitig den Höhenmessbereich $\Delta z$. Die beiden Intensitätsverläufe 280a und 280b schneiden sich bei einer Höhenkoordinate $z_0$, welche genau die mittige Höhenlage zwischen den beiden reellen Bildern 160a und 160b repräsentiert. Anhand von zwei gemessenen Intensitäten, einer ersten Intensität $I_1$, welche von der ersten Kamera 170a gemessen wird, und einer zweiten Intensität $I_2$, welche von der zweiten Kamera 170b gemessen wird, läßt sich die Höhenlage $z_m$ des jeweiligen Abtastpunktes bestimmen. Diese Bestimmung ist in Figur 2 grafisch dargestellt.

Unter der Voraussetzung, dass die beiden Intensitätsverläufe 280a und 280b exakt durch Gauß-Kurven beschrieben werden, kann die Höhenlage $z_m$ auch analytisch bestimmt werden. Dabei wird ein lineares Gleichungssystem mit zwei Gleichungen gelöst, welche jeweils den Verlauf der beiden gaußförmigen Intensitätsverläufe 280a und 280b beschreiben. Die Lösung

dieses Gleichungssystem liefert:

$$z_m = z_0 + [\ln(I_1) - \ln(I_2)] \times (\sigma^2/4\Delta z)$$

Dabei steht In für den natürlichen Logarithmus und σ ist die Halbwertsbreite der beiden gaußförmigen Intensitätsverläufe 280a und 280b.

Um eine schnelle Berechnung dieser Formel zu ermöglichen, können die beiden Logarithmen der Intensitäten I1 und I2 von einer in der Zeichnung nicht dargestellten Auswerteeinheit anhand einer in der Auswerteeinheit abgelegten Tabelle ermittelt werden.

Es wird darauf hingewiesen, dass die oben beschriebene Interpolation bei einer bekannten Halbwertsbreite σ unabhängig von der Absolutintensität bzw. der Reflektivität der Objektoberfläche ist.

Zusätzlich wird darauf hingewiesen, dass der Abstandssensor 100 auf vorteilhafte Weise gemeinsam mit einem optischen Abstandsschalter (siehe deutsche Patentanmeldung mit dem amtlichen Aktenzeichen 101 45 167.9-34) kombiniert werden kann. Dabei wird die zu erfassende Oberfläche in Richtung des Abstandssensors 100 so lange bewegt, bis der optische Abstandsschalter ein Signal ausgibt, sobald sich die zu erfassende Oberfläche bevorzugt gerade in der Mitte zwischen den beiden reellen Bildern 160a und 160b befindet. Zu diesem Zeitpunkt wird die Relativbewegung zwischen der zu erfassenden Oberfläche einerseits und dem Abstandssensor 100 und dem optischen Abstandsschalter andererseits gestoppt, so dass die zu erfassende Oberfläche beispielsweise für eine Höhen- und eine Koplanaritätsmessung relativ zu dem Abstandssensor 100 richtig positioniert ist.

Figur 3 zeigt einen Abstandssensor 300 gemäß einem weiteren Ausführungsbeispiel der Erfindung. Dabei sind die beiden Lochblendenmatrizen durch eine matrixförmige Anordnung von ersten Endflächen 314a von ersten Lichtwellenleitern 313a bzw. von zweiten Endflächen 314b von zweiten Lichtwellenleitern 313b ersetzt. Die Endflächen 314a bzw. 314b der Lichtwellenleiter 313a bzw. 313b wirken genau wie bei dem anhand von Figur 1 beschriebenen ersten Ausführungsbeispiel der Erfindung sowohl als optische Ausgänge wie auch als optische Eingänge. Der Verlauf der Beleuchtungsstrahlen 311a und 311b sowie der Messstrahlen 361a bzw. 361b durch den Strahlteiler 330 und die Abbildungsoptik 340 ist identisch mit den Strahlengängen in dem Abstandssensor 100. Aufgrund der relativ zu der Abbildungsoptik 340 gestaffelten Anordnung der ersten Endflächen 314a zu den zweiten Endflächen 314b entstehen in einem unterschiedlichen Abstand von der Abbildungsoptik 340 im Objektbereich reelle Bilder 360a der ersten Endflächen 314a und reelle Bilder 360b der zweiten Endflächen 314b.

Die den Endflächen 314a bzw. 314b abgewandten Enden der Lichtwellenleiter 313a bzw. 313b, welche in Figur 3 nicht dargestellt sind, sind jeweils sowohl mit einer Lichtquelle als auch mit einem Lichtdetektor gekoppelt. Diese Kopplung kann ebenso über einen Strahlteiler oder aber dadurch erfolgen, dass die den Endflächen 314a und 314b abgewandten Enden der Lichtwellenleiter 313a und 313b jeweils in zwei Teilenden aufgespalten sind, wobei ein Teilende mit einer Lichtquelle und das andere Teilende mit einem Lichtempfänger optisch gekoppelt ist.

Die Berechnung der Höhenlage $z_m$ der Abtastpunkte, welche sich zwischen den reellen Bildern 360a und 360b befinden, erfolgt wie anhand von Figur 2 beschrieben.

Zusammenfassend schafft die Erfindung einen konfokalen Abstandssensor 100, bei dem durch eine gestaffelte Anordnung von optischen Ausgängen relativ zu einer Abbildungsoptik 140 in dem Objektbereich des Abstandssensor 100 in unterschiedlicher Höhe reelle Bilder 160a, 160b der optischen Ausgänge erzeugt werden. Eine zu vermessende Oberfläche 150, welche sich in dem Bereich zwischen den reellen Bildern 160a und 160b befindet, streut die von den optischen Ausgängen emittierten Beleuchtungsstrahlen 111a und 111b zumindest teilweise zurück, so dass zwei Messstrahlen 161a und 161b erzeugt werden, deren Intensitäten jeweils von einem Lichtdetektor 170a, 170b erfasst werden. Durch eine Interpolation zwischen den gemessenen Lichtintensitäten kann die Höhenlage der abgetasteten Punkte der Oberfläche 150 berechnet werden. Gemäß einem Ausführungsbeispiel der Erfindung kann die zu vermessende Oberfläche 150 gleichzeitig an mehreren Tastpunkten vermessen werden. Bevorzugt werden zur Lichterzeugung zwei flächige Lichtquellen 110a und 110b und zur Lichtdetektion zwei flächige ortsauflösende Kameras verwendet.

**Patentansprüche**

1. Sensor zur schnellen optischen Abstandsmessung nach dem konfokalen Abbildungsprinzip mit

   - einem ersten optischen Ausgang, welcher einen ersten Beleuchtungsstrahl (111a) emittiert,
   - einem zweiten optischen Ausgang, welcher einen zweiten Beleuchtungsstrahl (111b) emittiert,
   - einem Strahlteiler (130), derart angeordnet, dass der erste Beleuchtungsstrahl (111a) nach einer Transmission durch den Strahlteiler (130) und der zweite Beleuchtungsstrahl (111b) nach einer Reflektion an dem Strahlteiler (130) zusammengeführt sind,
   - einer Abbildungsoptik (140), derart angeordnet und ausgebildet, dass die beiden zusammengeführten Beleuchtungsstrahlen (111a, 111b) auf die Oberfläche (150) eines Messobjekts gerichtet werden, wobei aufgrund von unterschiedlichen Abständen der beiden optischen Ausgänge zu der Abbildungsoptik (140) in unterschiedlichen Abständen von der Abbildungsoptik (140) ein erstes reelles Bild (160a) des ersten optischen Ausgangs und ein zweites reelles Bild (160b) des zweiten optischen Ausgangs erzeugt werden,

- einem ersten optischen Eingang, welcher an derselben Stelle wie der erste optische Ausgang angeordnet ist, so dass ein erster Messstrahl (161a), welcher durch eine zumindest teilweise Reflexion des ersten Beleuchtungsstrahls (111a) an der Oberfläche (150) erzeugt wird, nach einem Durchgang durch die Abbildungsoptik (140) und einer Transmission durch den Strahlteiler (130) in den ersten optischen Eingang trifft,

- einem zweiten optischen Eingang, welcher an derselben Stelle wie der zweite optische Ausgang angeordnet ist, so dass ein zweiter Messstrahl (161b), welcher durch eine zumindest teilweise Reflexion des zweiten Beleuchtungsstrahls (111b) an der Oberfläche (150) erzeugt wird, nach einem Durchgang durch die Abbildungsoptik (140) und einer Reflexion an dem Strahlteiler (130) in den zweiten optischen Eingang trifft,

- einem ersten Lichtdetektor (170a), welcher die Intensität des ersten Messstrahls (161a) erfasst,

- einem zweiten Lichtdetektor (170b), welcher die Intensität des zweiten Messstrahls (161b) erfasst, und

- einer Auswerteeinheit, welche mit den beiden Lichtdetektoren (170a, 170b) gekoppelt ist und welche aus einem Vergleich der Intensität des ersten Messstrahls (161a) mit der Intensität des zweiten Messstrahls (161b) den Abstand zwischen dem Sensor (100) und der Oberfläche (150) ermittelt.

**2.** Sensor nach Anspruch 1, zusätzlich mit

- einer bestimmten Anzahl von weiteren ersten optischen Ausgängen, welche seitlich versetzt zu dem ersten optischen Ausgang angeordnet sind und welche jeweils einen weiteren ersten Beleuchtungsstrahl emittieren, der nach einer Transmission durch den Strahlteiler (130) und einem Durchgang durch die Abbildungsoptik (140) auf die Oberfläche (150) trifft,

- einer gleichen Anzahl von weiteren zweiten optischen Ausgängen, welche seitlich versetzt zu dem zweiten optischen Ausgang angeordnet sind und welche jeweils einen weiteren zweiten Beleuchtungsstrahl emittieren, der nach einer Reflexion an dem Strahlteiler (130) und einem Durchgang durch die Abbildungsoptik (140) auf die Oberfläche (150) trifft,

- einer gleichen Anzahl von weiteren ersten optischen Eingängen, welche jeweils an derselben Stelle wie ein weiterer erster optischer Ausgang angeordnet sind, so dass jeweils ein weiterer erster Messstrahl, welcher durch eine zumindest teilweise Reflexion eines weiteren ersten Beleuchtungsstrahls an der Oberfläche (150) erzeugt wird, nach einem Durchgang durch die Abbildungsoptik (140) und einer Transmission durch den Strahlteiler (130) in den weiteren ersten optischen Eingang trifft,

- einer gleichen Anzahl von weiteren zweiten optischen Eingängen, welche jeweils an derselben Stelle wie ein weiterer zweiter optischer Ausgang angeordnet sind, so dass jeweils ein weiterer zweiter Messstrahl, welcher durch eine zumindest teilweise Reflexion eines weiteren zweiten Beleuchtungsstrahls an der Oberfläche (150) erzeugt wird, nach einem Durchgang durch die Abbildungsoptik (140) und einer Reflexion an dem Strahlteiler (130) in den weiteren zweiten optischen Eingang trifft,

- einer gleichen Anzahl von weiteren ersten Lichtdetektoren (170a), welche jeweils die Intensität eines weiteren ersten Messstrahls erfassen, und

- einer gleichen Anzahl von weiteren zweiten Lichtdetektoren (170b), welche jeweils die Intensität eines weiteren zweiten Messstrahls erfassen,

wobei sämtliche weiteren Lichtdetektoren (170a, 170b) ebenfalls mit der Auswerteeinheit gekoppelt sind, so dass aus einem Vergleich der Intensitäten der weiteren Messstrahlen jeweils der Abstand zwischen dem Sensor (100) und einer gleichen Anzahl von Abtastpunkten auf der Oberfläche (150) ermittelbar ist.

**3.** Sensor nach Anspruch 2, bei dem die optischen Ausgänge zeilenförmig angeordnet sind.

**4.** Sensor nach Anspruch 2 , bei dem die optischen Ausgänge matrixförmig angeordnet sind.

**5.** Sensor nach einem der Ansprüche 1 bis 4, bei dem die optischen Ausgänge und die optische Eingänge zumindest annähernd punktförmig sind.

**6.** Sensor nach einem der Ansprüche 1 bis 5, bei dem die optischen Ausgänge und die optische Eingänge jeweils mittels einer Endfläche (314a, 314b) eines Lichtwellenleiters (313a, 313b) realisiert sind.

**7.** Sensor nach einem der Ansprüche 1 bis 5, bei dem die optischen Ausgänge und die optische Eingänge jeweils mittels einer Lochblende (120a, 120b) realisiert sind.

**8.** Sensor nach einem der Ansprüche 1 bis 7, bei dem die Lichtdetektoren (170a, 170b) jeweils Schwarz-Weiß-Lichtdetektoren sind.

**9.** Sensor nach einem der Ansprüche 1 bis 8, bei dem die ersten Lichtdetektoren (170a) mittels einer ersten Kamera und die zweiten Lichtdetektoren (170b) mittels einer zweiten Kamera realisiert sind.

**10.** Sensor nach einem der Ansprüche 2 bis 9, bei dem

- zumindest eine Mehrzahl von ersten optischen Ausgängen mit einer ersten Lichtquelle (110a) und
- zumindest eine Mehrzahl von zweiten optischen Ausgängen mit einer zweiten Lichtquelle (110b) optisch gekoppelt sind.

# FIG 1

FIG 2

FIG 3